# FASCICULE DE BREVET EUROPEEN

(11) **EP 0 668 191 B1**
(45) Date de publication et mention de la délivrance du brevet: **19.11.1997**
(21) Numéro de dépôt: 95400330.7
(22) Date de dépôt: 16.02.1995
(51) Int. Cl.: B60R 7/06

(54) **Planche de bord de véhicule automobile**
Armaturenbrett eines Kraftfahrzeuges
Dashboard for automotive vehicle

(30) Priorité: 22.02.1994 FR 9401959
(43) Date de publication de la demande: 23.08.1995
(73) Titulaire: REGIE NATIONALE DES USINES RENAULT S.A., 92109 Boulogne Billancourt (FR); MATRA AUTOMOBILES SA, 78191 Trappes Cédex (FR)
(72) Inventeur: Milenovich, Milen, F-94230 Cachan (FR); Dedenis, Michel, F-91140 Villebon S/Yvette (FR)
(74) Mandataire: Ernst-Schonberg, Michel

(56) Documents cités:
- FR-A- 2 549 787
- US-A- 4 355 837
- US-A- 5 197 775

## Description

L'invention concerne une planche de bord de véhicule automobile dans laquelle un plateau arrière est limité par un bord transversal qui s'étend notamment devant une rangée de sièges de passagers du véhicule conformément au préambule de la revendication indépendante.

On qualifiera dans ce qui suit et dans les revendications par "avant" les orientations et parties de la planche de bord dirigés vers la base du parebrise du véhicule et "arrière" les éléments et parties de la planche de bord dirigés vers un siège du véhicule.

L'invention a plus particulièrement pour objet un agencement de modules intégrés à une telle planche de bord et plus particulièrement un module de rangement.

L'invention a également pour objet un module de rangement accessible individuellement ou conjointement par un premier et par un deuxième couvercle.

La publication US-A-4355837 décrit un module de rangement intégré à une planche de bord dans lequel une tablette de chargement possède un bord avant et un bord arrière. Des moyens obturateurs sont constitués par un premier couvercle monté à pivotement sur le module au-dessus du bord avant de ladite tablette et par un deuxième couvercle monté à pivotement autour d'un axe adjacent au bord arrière de la tablette. Les axes de rotation respectifs de l'un et l'autre couvercle sont adjacents à des surfaces d'appui constituées par la paroi avant et la surface de chargement du bac de rangement.

Dans un tel module de rangement, les couvercles possèdent conjointement une position de fermeture et peuvent occuper individuellement ou conjointement une position d'ouverture pour faciliter notamment le chargement du compartiment.

La publication FR-A-2549787 décrit un module équipé d'un couvercle rabattable de haut en bas dans le but de faciliter la préhension et le rangement des objets par le dessus.

L'invention a pour objet une planche de bord perfectionnée qui facilite notamment :
- la préhension et la mise en place des objets sur le support en soulevant un premier couvercle du module de rangement,
- la préhension et la mise en place des objets sur un support en ouvrant un deuxième couvercle localisé sur la façade arrière de la planche de bord,
- le rangement d'objets dans un volume de chargement accessible par le dessus et limité par une façade constituée par le deuxième couvercle,
- la confection temporaire d'un siège de secours en modifiant la position initiale du premier et du deuxième couvercle,
- la réalisation d'un repose-pieds au contact du bord arrière du deuxième couvercle placé dans une position superposée au support de chargement.

L'objet précité est satisfait conformément aux caractéristiques de la revendication indépendante.

D'autres caractéristiques et avantages de l'invention apparaîtront à la lecture de la description d'un exemple de réalisation de la planche de bord en référence au dessin annexé dans lequel :
- la figure 1 est une représentation perspective de l'ensemble de la planche de bord,
- la figure 2 est une vue en coupe du compartiment de rangement selon la ligne II-II de la figure 1,
- les figures 3, 4, 5, 6 sont des représentations schématiques des sections du module de rangement montrant les fonctions de rangement réalisées avec l'un et/ou l'autre couvercle,

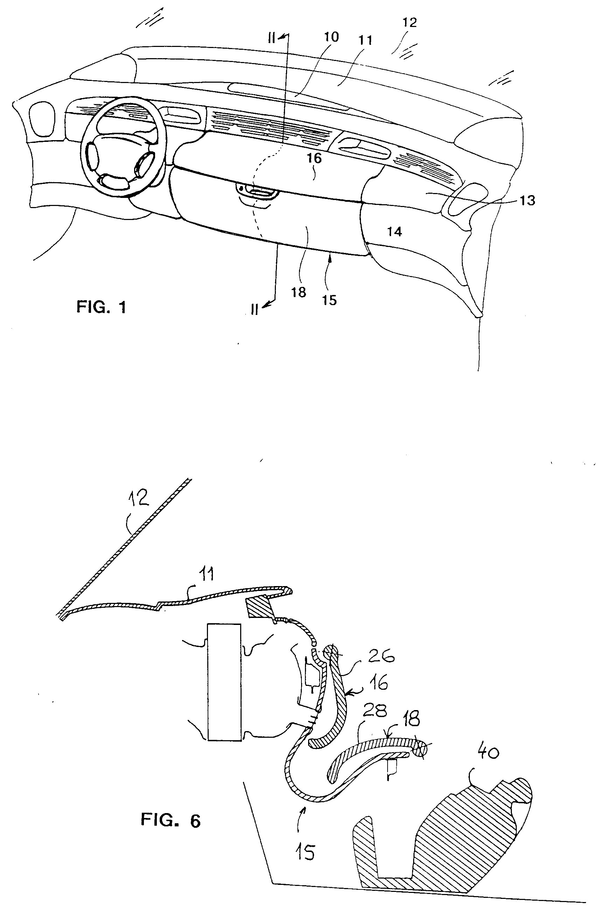

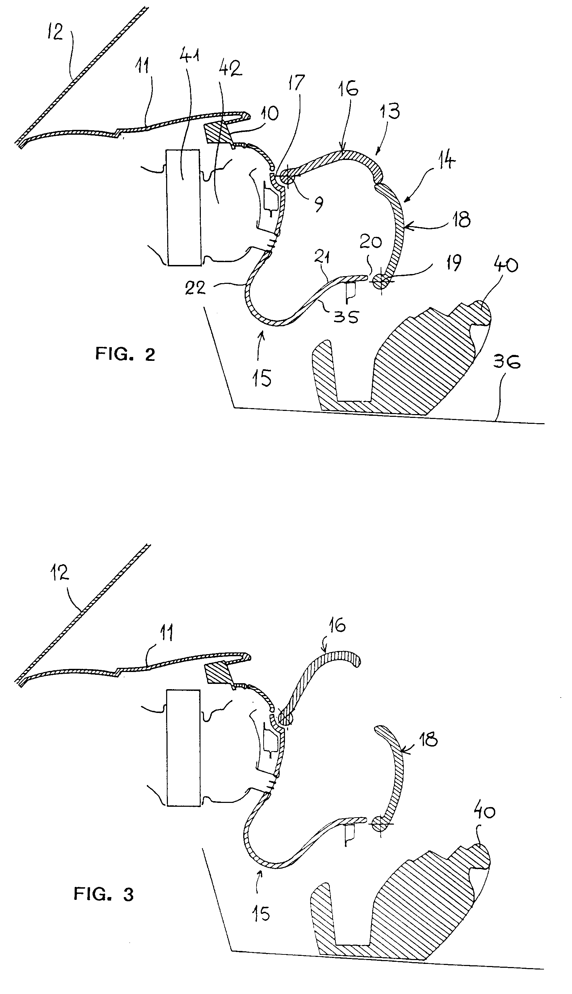

Ainsi que cela est montré à la figure 1 et 2 qui illustre un mode de réalisation de la planche de bord, un tableau d'instrumentation 10 est coiffé par un plateau avant 11 qui s'étend transversalement le long de la base du pare-brise 12. Un plateau arrière 13 est limité par un bord transversal 14 qui s'étend devant une rangée de sièges non représentée de passagers du véhicule.

Un module de rangement 15 est fermé à la fois par un premier couvercle obturateur 16 monté à pivotement sur le bord supérieur 17 du moduleautour d'un axe 9.

Un deuxième couvercle obturateur 18 est monté à pivotement autour d'un axe transversal 19 adjacent au bord arrière 20 du module, et d'un bac de rangement 21 qui possède un bord arrière 20 et une paroi avant 22.

Selon un aspect de l'invention l'axe 9 et l'axe 19 sont adjacents à des surfaces d'appui constituées par la paroi avant 22 et la surface de chargement du bac de rangement 21.

Selon une autre caractéristique de l'invention les couvercles 16 et 18 portent un capitonnage qui constitue temporairement un appui dorsal 26 et une assise 28 d'un passager enfant à l'arrêt du véhicule. Le capitonnage est également susceptible de servir de repose-pieds au passager du véhicule.

Selon une autre caractéristique de l'invention, le module 15 possède une face extérieure 35 tournée vers le plancher 36 du véhicule en surplomb d'un tiroir coulissant 40 mobile par exemple au contact d'une glissière supportée sur le plancher.

Le tiroir 40 peut porter avantageusement un ensemble d'accessoires tels qu'un poste radio-récepteur, un bac vide-poche, cette énumération n'étant pas limitative.

Ainsi que cela est montré à la figure 2, la structure de la planche de bord permet également le montage d'un évaporateur 41 de l'installation de chauffage et de climatisation du véhicule qui alimente en air frais une gaine 42. L'air peut être refroidi en traversant l'évaporateur. Une communication de la gaîne de ventilation 42 avec le module 15 permet ainsi le refroidissement du contenu dudit module.

La figure 3 illustre la planche de bord du véhicule sur laquelle l'ouverture du premier couvercle 16 permet la préhension et la mise en place des objets dans le bac de rangement 21.

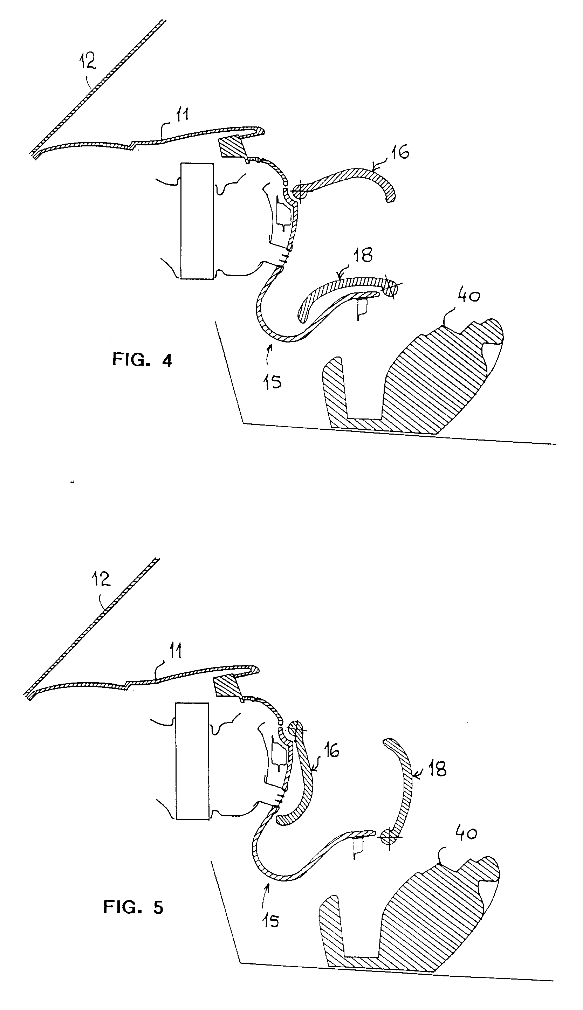

L'ouverture du deuxième couvercle 18 facilite le remplissage du bac 21. La disposition représentée à la figure 5 facilite également le rangement d'objets dans le volume de chargement augmenté, accessible par le dessus et limité par la façade constituée par le deuxième couvercle 18.

La figure 6 illustre la position rabattue des couvercles 16, 18 dans laquelle on confectionne temporairement un siège de secours.

La position représentée aux figures 4 et 6 du deuxième couvercle 18 au contact de la surface de chargement du bac 21 permet la réalisation d'un repose-pieds.

## Revendications

1. Planche de bord à module de rangement (15) dans laquelle un bac de rangement (21) possède une paroi avant (22) et un bord arrière (20), un premier couvercle obturateur (16) à capitonnage d'appui (26) monté à pivotement sur le bord supérieur du module (15) et un deuxième couvercle (18) à capitonnage d'appui (28) monté à pivotement autour d'un axe transversal (19) adjacent au bord arrière du bac de rangement, et dans laquelle les axes de rotation respectifs (9, 19) de l'un et l'autre couvercle (16, 18) sont adjacents à des surfaces d'appui constituées par la paroi avant (22) et la surface de chargement du bac de rangement (21), caractérisée par le fait que l'un et l'autre couvercle (16, 18) possèdent une position supplémentaire rabattue au contact de la paroi correspondante du bac de rangement.

2. Planche de bord selon la revendication 1, caractérisée par le fait que la face extérieure (35) du module de rangement (15) tournée vers le plancher du véhicule constitue le couvercle fixe d'un tiroir coulissant (40) au contact d'une glissière de plancher (36).

3. Planche de bord selon l'une quelconque des revendications 1 ou 2, caractérisée par le fait que le module de rangement (15) est relié à une gaine de ventilation (42).

## Claims

1. Dashboard with a storage module (15) in which a storage tray (21) is provided with a front wall (22) and a rear edge (20), a first screening cover (16) with supportive padding (26), mounted in a pivoting manner on the upper edge of the module (15), and a second cover (18) with supportive padding (28) mounted in a pivoting manner about a transverse axis (19) adjacent to the rear edge of the storage tray, and in which the respective axes of rotation (9, 19) of the two covers (16, 18) are adjacent to bearing surfaces constituted by the front wall (22) and the loading surface of the storage tray (21), characterised by the fact that both covers (16, 18) have a supplementary closed position in contact with the corresponding wall of the storage tray.

2. Dashboard according to claim 1, characterised by the fact that the exterior face (35) of the storage module (15) turned towards the floor of the vehicle constitutes the fixed cover of a drawer (40) sliding in contact with a floor runner (36).

3. Dashboard according to any one of claims 1 or 2, characterised by the fact that the storage module (15) is connected to a ventilation duct (42).

## Patentansprüche

1. Armaturenbrett mit einem Aufbewahrungsmodul (15), in dem ein Aufbewahrungsraum (21) eine vordere Wand (22) und einen hinteren Rand (20), eine erste Verschlußabdeckung (16) mit Stützpolsterung (26), die gelenkig am oberen Rand des Moduls (15) montiert ist, und eine zweite Abdeckung (18) mit Stützpolsterung (28) aufweist, die um eine transversale nahe dem Hinterrand des Aufbewahrungsfachs gelegene Achse (19) gelenkig montiert ist, aufweist, wobei die jeweilige Rotationsachsen (9, 19) der beiden Abdeckungen (16, 18) nahe an Stützflächen liegen, die durch die vordere Wand (22) und die Beladungsfläche des Aufbewahrungsfachs (21) gebildet werden, dadurch gekennzeichnet, daß die beiden Abdeckungen (16, 18) eine zusätzliche Klapposition besitzen, an der sie in Kontakt mit der korrespondierenden Wand des Aufbewahrungsfachs stehen.

2. Armaturenbrett nach Anspruch 1, dadurch gekennzeichnet, daß die in Richtung des Fahrzeugbodens gerichtete Außenseite (35) des Aufbewahrungsmoduls (15) die feste Abdeckung einer Schublade (40) bildet, die in Kontakt mit einer Gleitschiene am Fahrzeugboden verschiebbar (36) ist.

3. Armaturenbrett nach einem der Ansprüche 1 oder 2, dadurch gekennzeichnet, daß das Aufbewahrungsmodul (15) mit einer Ventilationsleitung (42) verbunden ist.
